(19) Europäisches Patentamt

European Patent Office

Office européen des brevets

(11) **EP 2 784 891 A1**

(12) # EUROPEAN PATENT APPLICATION
published in accordance with Art. 153(4) EPC

(43) Date of publication:
**01.10.2014 Bulletin 2014/40**

(21) Application number: **12851794.3**

(22) Date of filing: **30.10.2012**

(51) Int Cl.:
*H02H 3/16* (2006.01)    *H02H 3/44* (2006.01)

(86) International application number:
**PCT/JP2012/078022**

(87) International publication number:
**WO 2013/077152 (30.05.2013 Gazette 2013/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **21.11.2011  JP 2011254353**

(71) Applicant: **Kabushiki Kaisha Toshiba**
**Minato-ku**
**Tokyo 105-8001 (JP)**

(72) Inventors:
• **NAKATSUKA, Tomomichi**
  **Tokyo 105-8001 (JP)**

• **KAMIMURA, Osamu**
  **Tokyo 105-8001 (JP)**
• **FUKUDA, Yasuyuki**
  **Tokyo 105-8001 (JP)**
• **FUKUDA, Kazuyoshi**
  **Tokyo 105-8001 (JP)**

(74) Representative: **Granleese, Rhian Jane**
**Marks & Clerk LLP**
**90 Long Acre**
**London WC2E 9RA (GB)**

(54)    **DC FEEDING PROTECTION RELAY DEVICE AND FAILURE DETECTION METHOD**

(57)    An input means inputs, at intervals of a unit time, a current which is supplied from a substation. A first calculation means calculates a current variation amount per the unit time, based on the current which is input at the intervals of the unit time. A holding means holds, at the intervals of the unit time, a maximum value of the calculated current variation amount. A second calculation means calculates an operation amount by integrating the maximum value of the current variation amount held by the holding means at the intervals of the unit time. A detection means detects a fault in a section to which a current is supplied from the substation, based on the calculated operation amount.

FIG. 2

EP 2 784 891 A1

## Description

Technical Field

Embodiments described herein relate generally to a DC feeding protective relay device and a fault detection method.

Background Art

In general, there is known a method (protection method) of detecting a fault of a feeding circuit of a DC electric railway and effecting protection, by discriminating between a fault current (a current occurring due to a fault in the feeding circuit) and a load current (a driving current of an electric car), with use of a fault selection relay which detects a current variation amount ($\Delta$I) per predetermined time.

Citation List

Patent Literature

Patent document 1:

Jpn. Pat. Appln. KOKAI Publication No. S57-13924 Patent document 2: Jpn. Pat. Appln. KOKAI Publication No. 2007-49858

Non-Patent Literature

Non-patent document 1:

"Denki-Tetsudo Handbook (Electric Railway Handbook)", Corona-sha, 2007, edited by Denki-Tetsudo Handbook Editorial Committee

Non-patent document 2:

"Denki-Gakkai Gijyutsu Hokoku (Institute of Electrical Engineers Technical Report)", No. 542, "Survey on Protection and Protection Coordination in DC electric railway", Institute of Electrical Engineers, 1995.

In a DC feeding circuit, however, if such a fault (high-resistance ground fault) occurs in which a feeder line or an electric car line comes in contact with a structure which supports the feeder line or electric car line, a fault current occurring in accordance with the fault is smaller than in cases of other faults. It is thus difficult to distinguish such a fault current from a load current. Therefore, in the above-described method, it is difficult to detect a high-resistance ground fault.

Incidentally, the limit value of a fault point resistance, which can be detected by the above-described method, is about 0.5 $\Omega$. However, in the above-described structure, there is a ground resistance of about several-ten to several-thousand $\Omega$.

Thus, the object of the present invention is to provide a DC feeding protective relay device and a fault detection method, which can detect a high-resistance ground fault.

Summary of Invention

A DC feeding protective relay device according to an embodiment includes an input means, first calculation means, holding means, second calculation means, and detection means.

The input means inputs, at intervals of a unit time, a current which is supplied from a substation.

The first calculation calculates a current variation amount per the unit time, based on the current which is input at the intervals of the unit time.

The holding means holds, at the intervals of the unit time, a maximum value of the current variation amount calculated by the first calculation means.

The second calculation means calculates an operation amount by integrating the maximum value of the current variation amount held by the holding means at the intervals of the unit time.

The detection means detects a fault in a section to which a current is supplied from the substation, based on the operation amount calculated by the second calculation means.

Brief Description of Drawings

FIG. 1 is a view illustrating a configuration of a DC feeding circuit of a DC electric railway, which includes a DC feeding protective relay device according to a first embodiment.

FIG. 2 is a view for explaining an operation of the DC feeding protective relay device 7 according to this embodiment.

FIG. 3 is a view for concretely explaining the detection of a high-resistance ground fault by the DC feeding protective relay device 7 according this embodiment.

FIG. 4 is a graph illustrating an example of feeding currents I1 to I4 in respective substations SS1 to SS4 in a case where a high-resistance ground fault Rf has occurred.

FIG. 5 is a graph illustrating an example of rail voltages Ep1 to Ep4 in the the respective substations SS1 to SS4 in a case where the high-resistance ground fault Rf has occurred.

FIG. 6 is a graph illustrating, in enlarged scale, voltage values of the rail voltages Ep1 to Ep4 shown in FIG. 5.

FIG. 7 is a graph illustrating an example of current variation amounts ΔIsp1 to ΔIsp4 per unit time in the feeding currents I1 to I4 shown in FIG. 4.

FIG. 8 is a graph illustrating an example of maximum values MAXdI1 to MAXdI4 of current variation amounts which are held at unit time intervals in first to fourth DC feeding protective relay devices 7.

FIG. 9 is a graph illustrating an example of operation amounts ∑MAXdI1 to ∑MAXdI4 calculated in the first to fourth DC feeding protective relay devices 7.

FIG. 10 is a view for explaining an operation of a DC feeding protective relay device 7 according to a second embodiment.

FIG. 11 is a view illustrating a configuration of a DC feeding circuit of a DC electric railway, which includes a DC feeding protective relay device according to a third embodiment.

FIG. 12 is a view for explaining an operation of the DC feeding protective relay device 7 according to this embodiment.

FIG. 13 is a view illustrating a configuration of a DC feeding circuit of a DC electric railway, which includes a DC feeding protective relay device according to a fourth embodiment.

FIG. 14 is a view for explaining an operation of the DC feeding protective relay device 700 according to this embodiment.

Description of Embodiments

various embodiments will be described hereinafter with reference to the accompanying drawings.

(First embodiment)

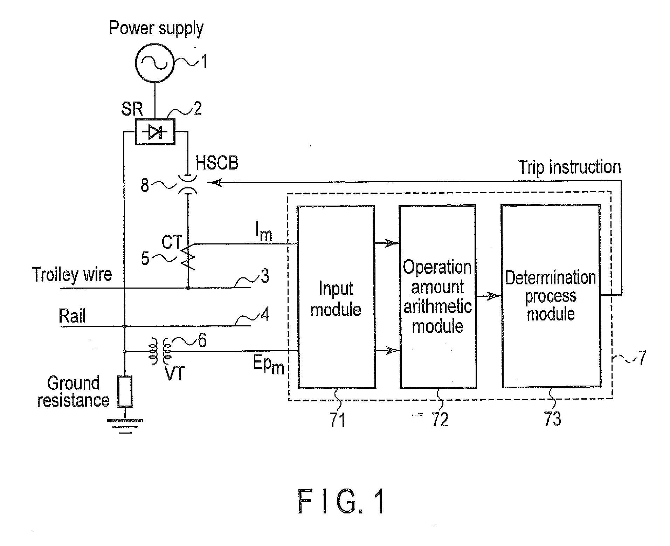

To begin with, a first embodiment is described. FIG. 1 illustrates a configuration of a DC feeding circuit of a DC electric railway, which includes a DC feeding protective relay device according to this embodiment.

The DC feeding circuit illustrated in FIG. 1 is a circuit for supplying power (current and voltage), which is fed from substations, to an electric car. Incidentally, substations are provided at intervals of, e.g., several-ten km in a section over which an electric car runs. Each substation feeds power to the section corresponding to the associated substation.

As show in FIG. 1, the DC feeding circuit includes a power supply 1, a rectifier (SR) 2, a trolley wire 3, a rail 4, a current sensor (CT) 5, a voltage sensor (VT) 6, a DC feeding protective relay device (protective relay) 7, and a DC high-speed circuit-breaker (HSCB) 8. Incidentally, the power supply 1, rectifier 2 and DC high-speed circuit-breaker 8 are provided on the premises of each of the above-described substations.

In this feeding circuit, the substation converts power of the power supply (three-phase AC power supply) 1 to DC by the rectifier 2, and feeds the DC to the electric car.

The current (feeding current), which is supplied from the substation in this manner, returns to the substation from the trolley wire 4 via the rail 5.

At this time, the feeding current is level-converted by the current sensor 5, and is taken into the DC feeding protective relay device 7. In addition, a voltage (rail voltage) between the ground and the rail in a section, to which power is supplied from the substation, is level-converted by the voltage sensor 6, and is taken into the DC feeding protective relay device 7. In the meantime, a feeding current ($I_m$), which has been level-converted by the current sensor 5, and a

rail voltage (Ep$_m$), which has been level-converted by the voltage sensor 6, are taken into the DC feeding protective relay device 7 at unit time intervals.

The DC feeding protective relay device 7 is used in order to detect a fault (in particular, a high-resistance ground fault) in the section to which power is supplied from the above-described substation. Incidentally, in the present embodiment, a high-resistance ground fault occurring outside of the premises of the associated substation is set to be a target of detection.

Although omitted in FIG. 1, in the DC feeding circuit, the DC feeding protective relay device 7 is provided in association with each substation. In the description below, the section in which a fault is detected by the DC feeding protective relay device 7 (i.e., the section to which power is supplied from the substation corresponding to the DC feeding protective relay device 7) is referred to as a protection section, for the sake of convenience.

The DC feeding protective relay device 7 includes an input module 71, an operation amount arithmetic module 72 and determination process module 73.

The input module 71 includes an input converter and an analog/digital converter. The input converter executes level conversion of the feeding current (I$_m$) and rail voltage (Ep$_m$), which have been taken into the DC feeding protective relay device 7. The analog/digital converter executes conversion (quantization) of the feeding current and rail voltage to digital amounts after the level conversion has been executed by the input converter.

The operation amount arithmetic module 72 executes an arithmetic operation, based on the feeding current (amount) and rail voltage (amount) quantized by the analog/digital converter included in the input module 71, and calculates the operation amount (the operation amount in the protection section).

The determination process module 73 determines (detects) a fault of the DC feeding circuit, based on the operation amount calculated by the operation amount arithmetic module 72.

When a fault has been detected by the determination process module 73, a trip instruction is sent to the DC high-speed circuit-breaker 8.

The DC high-speed circuit-breaker 8 has a function of shutting off the feeding current from the rectifier 2, in response to the trip instruction.

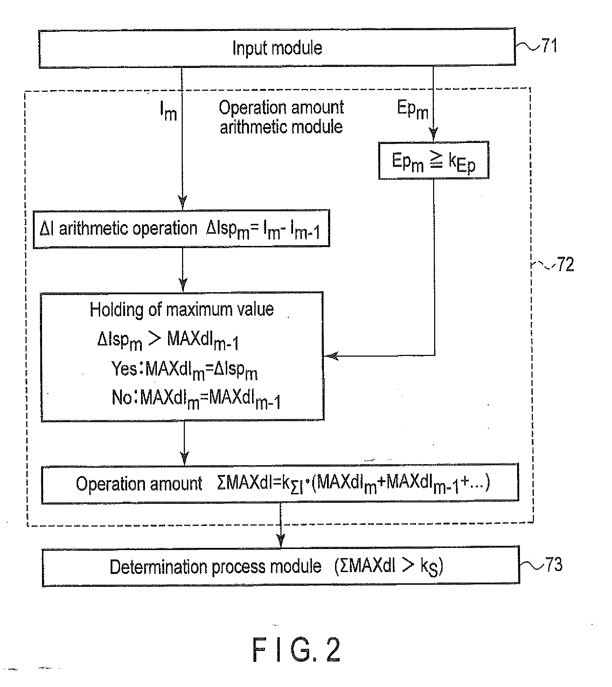

Next, referring to FIG. 2, a description is given of the operation of the DC feeding protective relay device 7 according to the present embodiment.

To start with, the input module 71 inputs the feeding current (I$_m$) which has been level-converted by the current sensor 5, and the rail voltage (Ep$_m$) which has been level-converted by the voltage sensor 6. Incidentally, the feeding current I$_m$ and the rail voltage Ep$_m$ are input at unit time intervals.

The feeding current I$_m$ and the rail voltage Ep$_m$, which have been input by the input module 71, are level-converted by the input converter which is included in the input module 71, and are then quantized by the analog/digital converter included in the input module 71, and delivered to the operation amount arithmetic module 72. Specifically, in the operation amount arithmetic module 72, the feeding current (amount) and rail voltage (amount) are acquired at unit time intervals.

Next, a description will be given of a process which is executed by the operation amount arithmetic module 72 included in the DC feeding protective relay device 7. In this description, it is assumed that the feeding current I$_m$ and the rail voltage Ep$_m$ have been acquired. Incidentally, the process to be described below is executed each time (i.e., at unit time intervals) the feeding current and the rail voltage are acquired.

In this case, the operation amount arithmetic module 72 calculates a current variation amount (ΔIsp$_m$) per unit time. This current variation amount ΔIsp$_m$ per unit time is calculated by the following formula (1).

$$\Delta Isp_m = I_m - I_{m-1} \qquad \ldots(1)$$

In formula (1), I$_{m-1}$ represents a current in the past, that is, a current (amount) obtained immediately before (a unit time before) a feeding current I$_m$.

Incidentally, in order to prevent an unnecessary operation at a time when, for example, regeneration has become ineffective, a process may be executed for setting the current variation amount in the negative region at zero.

On the other hand, the operation amount arithmetic module 72 determines whether the rail voltage Ep$_m$ is a predetermined value (K$_{Ep}$) or more, as expressed by the following formula (2).

$$Ep_m \geq K_{Ep} \qquad \ldots(2)$$

In the meantime, K$_{Ep}$ is, for example, a value higher than a steady-state rail voltage, and it is assumed that a proper value for fault determination is set for $K_{Ep}$.

When it has been determined that formula (2) is not satisfied, that is, the rail voltage $Ep_m$ is not $K_{Ep}$ or more, no subsequent process is executed.

On the other hand, when it has been determined that formula (2) is satisfied, that is, the rail voltage $Ep_m$ is $K_{Ep}$ or more, the operation amount arithmetic module 72 holds, for example, in the inside thereof, a maximum value ($MAXdI_m$) of the current variation amount, among the calculated current variation amounts ($\Delta Isp_m$, $\Delta Isp_{m-1}$, $\Delta Isp_{m-2}$,...) per unit time.

As described above, the process of the operation amount arithmetic module 72, which is included in the DC feeding protective relay device 7 according to the embodiment, is executed each time the feeding current and rail voltage are acquired (i.e., at unit time intervals). Specifically, by the process of the operation amount arithmetic module 72 at a time when the feeding current $I_{m-1}$ and the rail voltage $Ep_{m-1}$ immediately prior to the acquisition of the feeding current $I_m$ and the rail voltage $Ep_m$ have been acquired, the operation amount arithmetic module 72 holds therein the maximum value ($MAXdI_{m-1}$) of current variation amounts ($\Delta Isp_{m-1}$, $\Delta Isp_{m-2}$,...) in the past before the acquisition of the feeding current $I_m$ and the rail voltage $Ep_m$.

In other words, the maximum value $MAXdI_m$ of the current variation amount, which is held in the operation amount arithmetic module 72, among the calculated current variation amounts $\Delta Isp_m$, $\Delta Isp_{m-1}$, $\Delta Isp_{m-2}$, ... , per unit time, becomes the greater value between the current variation amount $\Delta Isp_m$ calculated as described above and the maximum value $MAXdI_{m-1}$ of current variation amounts in the past.

Accordingly, the operation amount arithmetic module 72 compares the current variation amount $\Delta Isp_m$ and the maximum value $MAXdI_{m-1}$ of the current variation amount in the past, and holds the greater value of these as the the maximum value $MAXdI_m$ of the current variation amount.

In this manner, by the process of the operation amount arithmetic module 72 being executed each time (at unit time intervals) the feeding current and the rail voltage are acquired, the operation amount arithmetic module 72 holds, at unit time intervals, the maximum value of the current variation amount at that time point.

If the maximum value $MAXdI_m$ of the current variation amount is held as described above, the operation amount arithmetic module 72 integrates the maximum value ($MAXdI_m$, $MAXdI_{m-1}$,...) of the current variation amount per unit time, thereby calculating the operation amount ($\Sigma MAXdI$) in the protection section of the DC feeding circuit. Specifically, this operation amount $\Sigma MAXdI$ is calculated by the following formula (3).

$$\Sigma MAXdI = k_{\Sigma I} \cdot (MAXdI_m + MAXdI_{m-1} + \ldots) \qquad \ldots (3)$$

In formula (3), $k_{\Sigma I}$ is a coefficient which is used in level adjustment of the operation amount, and is determined based on the condition of the DC feeding circuit, the operation time, etc.

The determination process module 73 compares the operation amount $\Sigma MAXdI$ calculated by the operation amount arithmetic module 72 with a predetermined value ($k_s$). In this case, as indicated by the following formula (4), the determination process module 73 determines whether the operation amount $\Sigma MAXdI$ is $k_s$ or more.

$$\Sigma MAXdI \geq k_s \qquad \ldots (4)$$

When it has been determined that formula (4) is satisfied, that is, the operation amount $\Sigma MAXdI$ is $k_s$ or more, a fault in the protection section (i.e., the section to which current is supplied from the substation) is detected, and a trip instruction is sent to the DC high-speed circuit-breaker 8. Thereby, the supply of feeding current to the section, in which the fault was detected, from the substation corresponding to the DC feeding protective relay device 7 is shut off.

In the above description, the current variation amount $\Delta Isp_m$ per unit time has been described as being calculated by formula (1). However, such a configuration may be adopted by which this current variation amount is calculated by other methods; for example, a method using a differential arithmetic operation.

A concrete description will now be given of the detection of a high-resistance ground fault by the DC feeding protective relay device 7 according to the embodiment.

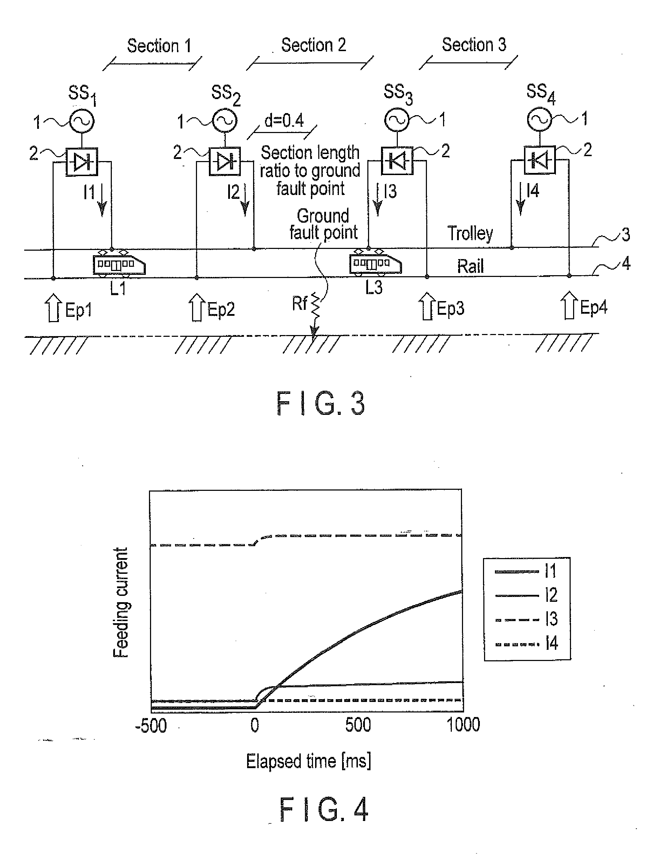

As illustrated in FIG. 3, it is assumed that substations SS1 to SS4 are provided at intervals of, e.g., several-ten km. In addition, a section between the substations SS1 and SS2 is referred to as a section 1, a section between the substations SS2 and SS3 is referred to as a section 2, and a section between the substations SS3 and SS4 is referred to as a section 3.

Incidentally, power is supplied to the section 1 from the substations SS1 and SS2, power is supplied to the section 2 from the substations SS2 and SS3, and power is supplied to the section 3 from the substations SS3 and SS4.

A case is now assumed in which a high-resistance ground fault Rf has occurred in the section 2 (i.e., between the substations SS2 and SS3). In the meantime, it is assumed that a section length ratio from the substation SS2 to a point of the occurrence of the high-resistance ground fault Rf (hereinafter, simply referred to as "fault point") is 0.4. Specifically, the fault point is a point closer to the substation SS2, relative to a middle point between the substations SS2 and SS3.

In the description below, feeding currents, which are supplied from the substations SS1 to SS4, are referred to as feeding currents I1 to I4, respectively. In addition, rail voltages at the substations SS1 to SS4 are referred to as rail voltages Ep1 to Ep4, respectively.

Incidentally, although not illustrated in FIG. 3, in the DC feeding circuit, there are provided DC feeding protective relay devices (hereinafter referred to as first to fourth DC feeding protective relay devices) 7, which correspond to the substations SS1 to SS4.

FIG. 4 illustrates an example of the feeding currents I1 to I4 in the respective substations SS1 to SS4 in a case where the above-described high-resistance ground fault Rf has occurred.

It is now assumed that, as illustrated in FIG. 3, an electric car L1 exists immediately under the substation SS1, and started power running at a time (elapsed time 0) of the high-resistance ground fault. In addition, it is assumed that an electric car L3 is running at a fixed speed immediately under the substation SS3 at the time of the high-resistance ground fault.

In this case, as shown in FIG. 4, the feeding currents I1 to I4 in the respective substations SS1 to SS4 vary at unit time intervals.

Specifically, since the electric car L1 existing immediately under the substation SS1 started power running at the time of the high-resistance ground fault Rf, as described above, the feeding current I1 gradually increases from the elapsed time 0.

In addition, as described above, since the high-resistance ground fault Rf occurred in the section 2, the feeding currents I2 and I3 sharply increase at the elapsed time 0 (i.e., the time of the high-resistance ground fault Rf) due to the influence of a current (fault current) occurring in response to the high-resistance ground fault Rf. In the meantime, since the electric car L3 is running at a fixed speed immediately under the substation SS3 at the time of the high-resistance ground fault, as described above, the value of the feeding current I2 is higher than the other feeding current.

On the other hand, since no high-resistance ground fault Rf occurs in the section 3, there is no effect of a fault current on the feeding current I4.

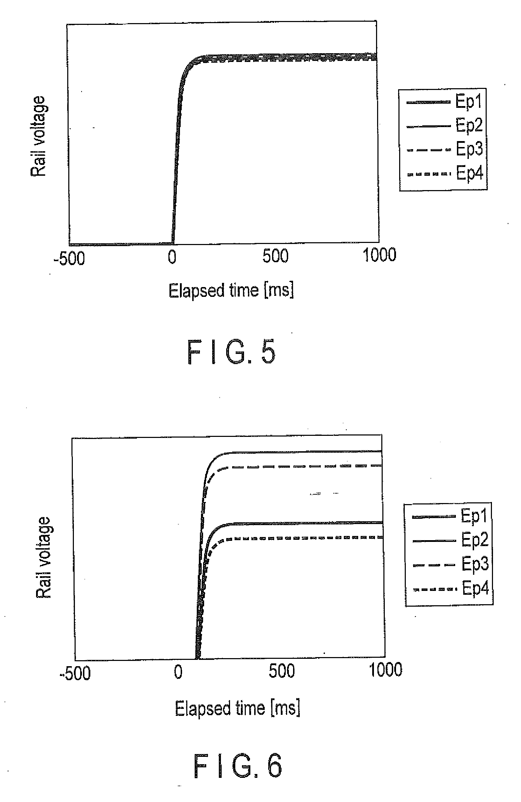

In addition, FIG. 5 illustrates an example of rail voltages Ep1 to Ep4 (voltage values of these) in the respective substations SS1 to SS4 in a case where the above-described high-resistance ground fault Rf has occurred.

In the case where the high-resistance ground fault Rf has occurred at a point near the substation SS2, as described above, the rail voltages Ep1 to Ep4 in the respective substations SS1 to SS4 increase, as shown in FIG. 5, from the time point at which the high-resistance ground fault Rf occurred (the time point of elapsed time 0).

If the scale of the voltage values of the rail voltages Ep1 to Ep4 shown in FIG. 5 is enlarged, the voltage values become as illustrated in FIG. 6. Referring to FIG. 6, there are differences between the rail voltages Ep1 to Ep4 in accordance with the distance to the fault point.

Incidentally, the feeding currents I1 to I4 shown in FIG. 4 and the rail voltages Ep1 to Ep4 shown in FIG. 5 (FIG. 6) are taken into the first to fourth DC feeding protective relay devices 7 at unit time intervals.

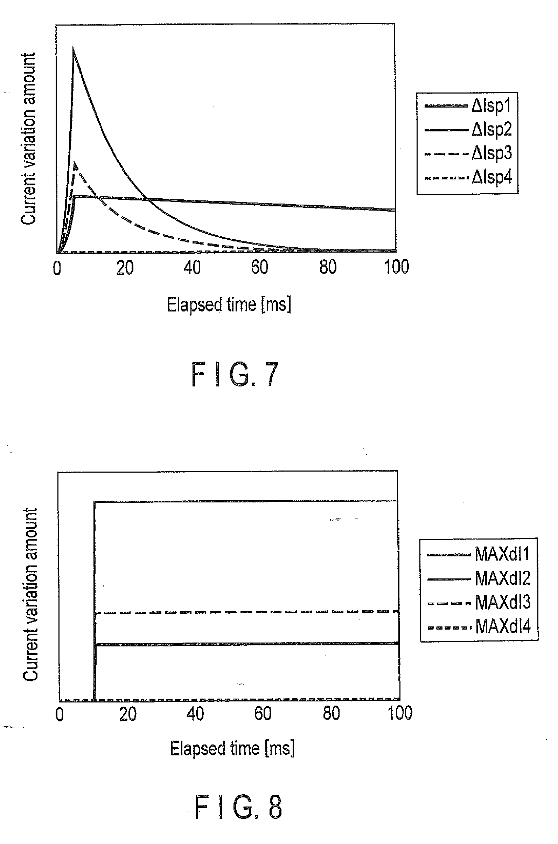

In addition, FIG. 7 illustrates an example of current variation amounts ΔIsp1 to ΔIsp4 per unit time in the feeding currents I1 to I4 shown in FIG. 4. As shown in FIG. 4, the fault current becomes constant at about 100 ms from the time of the high-resistance ground fault. Thus, the current variation amounts ΔIsp2 to AIsp3 increase in a period of several ms from the time of the high-resistance ground fault, and then gradually decrease, and go to substantially zero at a time point of 100 ms after the time of the high-resistance ground fault, at which the fault current becomes constant.

On the other hand, the current variation amount ΔIsp1 shown in FIG. 7 has a value corresponding to a gentle rise of the feeding current I1 shown in FIG. 4. In addition, since the feeding current I4 is unchanged, as shown in FIG. 4, the current variation amount ΔIsp4 shown in FIG. 7 is substantially zero.

The current variation amounts ΔIsp1 to ΔIsp4 shown in FIG. 7 are calculated at unit time intervals by the operation amount arithmetic module 72 included in each of the first to fourth DC feeding protective relay devices 7. Since the detailed description thereof has been given above, it is omitted here.

If the high-resistance ground fault Rf occurs, the rail voltages Ep1 to Ep4 increase, as illustrated in FIG. 5 and FIG. 6. Thus, in the first to fourth DC feeding protective relay devices 7 (the operation arithmetic modules 72 included therein), it is determined that the rail voltages Ep1 to Ep4 are $K_{Ep}$ or more. In this case, in each of the first to fourth DC feeding protective relay devices 7, the maximum value of the current variation amount is held.

FIG. 8 illustrates an example of maximum values MAXdI1 to MAXdI4 of current variation amounts which are held at unit time intervals in the first to fourth DC feeding protective relay devices 7. In the case where the current variation amount increases after the occurrence of the high-resistance ground fault, like the current variation amounts ΔIsp1 to ΔIsp3 shown in FIG. 7, the maximum values MAXdI1 to MAXdI3 of current variation amounts also increase accordingly (updated at unit time intervals), as shown in FIG. 8. On the other hand, in the case where the current variation amount begins to fall, like the current variation amounts ΔIsp1 to ΔIsp3 shown in FIG. 7, the maximum values of the current variation amounts before the fall (i.e., the maximum values of the current variation amounts in the past) are continuously held as MAXdI1 to MAXdI3, as shown in FIG. 8. Incidentally, since the current variation amount ΔIsp4 shown in FIG. 7 is unchanged, the maximum value MAXdI4 of the current variation amount is also unchanged as shown in FIG. 8.

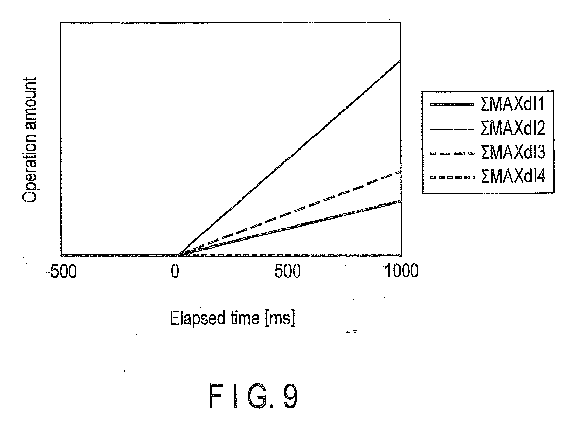

FIG. 9 illustrates an example of operation amount $\sum$ MAXdI1 to $\sum$MAXdI4 calculated in the first to fourth DC feeding protective relay devices 7.

The operation amount $\sum$MAXdI1 shown in FIG. 9 is an operation amount per unit time, which has been calculated by integrating the maximum value MAXdI1 of the current variation value shown in FIG. 8 which has been held at unit time intervals. Since the same applies to the other operation amounts $\sum$MAXdI2 to $\sum$MAXdI4, a detailed description thereof is omitted.

As shown in FIG. 9, the value of the operation amount $\sum$MAXdI2 in the second DC feeding protective relay device 7, which corresponds to the substation SS2 that is closest to the fault point, exceeds the predetermined value ($K_s$) earliest.

In this manner, when the operation amount $\sum$MAXdI2 has exceeded $K_s$, a fault in the DC feeding circuit can be detected in the second DC feeding protective relay device 7. Furthermore, a fault location (fault section) in the DC feeding circuit can be determined by the position of the second DC feeding protective relay device 7 which calculated the operation amount $\sum$MAXdI2 that exceeded $K_s$.

As has been described above, in the present embodiment, a current (feeding current) which is supplied from a substation is input at intervals of a unit time. A current variation amount per the unit time is calculated based on the current which is input at the intervals of the unit time. A maximum value of the calculated current variation amount per the unit time is held, and an operation amount is calculated by integrating the maximum value of the current variation amount held at the intervals of the unit time, and a fault in a section, to which the current is supplied from the substation, is detected based on the calculated operation amount. In the present embodiment, by this structure, a high-resistance ground fault can be detected.

Specifically, a current variation amount of a fault current caused by a high-resistance ground fault is small. However, in the present embodiment, the maximum value of the current variation amount is held at unit time intervals, and the maximum values of the current variation amount are added, thereby calculating the operation amount. Since the operation amount, which has been calculated from the amount of electricity of a substation near the fault point, reaches the predetermined value $K_s$ earliest, the high-resistance ground fault can be detected, and the fault section can be discriminated.

In addition, in the present embodiment, it should suffice if attention is paid to the electricity amount (current variation amount) at about 100 ms from the occurrence of a fault. Therefore, the time needed for fault detection is several-hundred ms or several s, and the ground fault can be detected in a very short time.

Furthermore, in the embodiment, since other equipment, such as a discharge gap, is obviated, the cost for fault detection can be suppressed.

(Second embodiment)

Next, a second embodiment is described. Since the structure of a DC feeding circuit of a DC electric railway, which includes a DC feeding protective relay device according this embodiment, is the same as in the above-described first embodiment, a description will be given by referring to FIG. 1, where necessary.

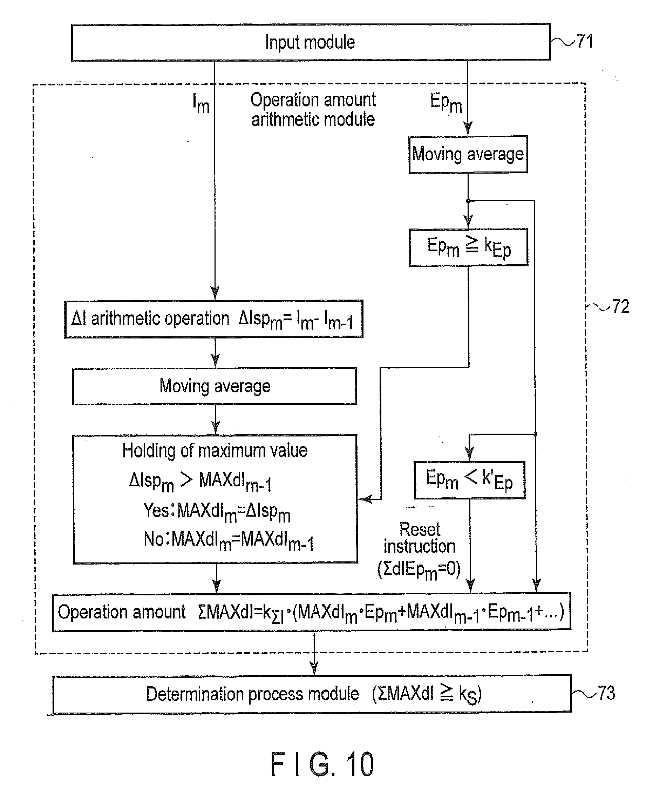

Referring to FIG. 10, a description is given of the operation of the DC feeding protective relay device 7 relating to this embodiment. Incidentally, a detailed description of the same parts as in the above-described FIG. 2 is omitted. Different parts from FIG. 2 will be mainly described.

In the DC feeding protective relay device 7 according to the above-described first embodiment, it is possible that high-frequency noise is superimposed on the rail voltage (amount) which is delivered to the operation amount arithmetic module 72 and on the current variation amount which is calculated by the operation amount arithmetic module 72.

Thus, in the present embodiment, as illustrated in FIG. 10, high-frequency noise of the rail voltage and current variation amount is eliminated by a moving average in the operation amount arithmetic module 72. Incidentally, regarding the moving average, for example, it should suffice if a plurality of successive sampling data are added.

In addition, in the present embodiment, in order to clarify a difference between substations (i.e., operation amounts calculated by respective DC feeding protective relay devices 7), the operation amount arithmetic module 72 calculates the operation amount ($\sum$MAXdI) in the protection section of the DC feeding circuit by integrating (adding) a product between the maximum value of the current variation amount and the rail voltage. Specifically, this operation amount $\sum$MAXdI is calculated by the following formula (5).

$$\sum MAXdI = k_{\Sigma I} \cdot (MAXdI_m \cdot Ep_m + MAXdI_{m-1} \cdot Ep_{m-1} + \ldots)$$

$$\ldots(5)$$

In addition, in the present embodiment, the operation amount arithmetic module 72 determines whether the rail voltage $Ep_m$ is less than a predetermined value ($K'_{Ep}$), as indicated by the following formula (6).

$$Ep_m \geq K'_{Ep} \qquad \ldots(6)$$

In the meantime, $K'_{Ep}$ may be a value which is different from or identical to the above-described $K_{Ep}$.

When it has been determined that formula (6) is satisfied, that is, the rail voltage $Ep_m$ is less than $K'_{Ep}$, the operation amount arithmetic module 72 resets the calculated operation amount as described above.

On the other hand, when it has been determined that formula (6) is not satisfied, that is, the rail voltage $Ep_m$ is $K'_{Ep}$ or more, the operation amount is not reset.

In other words, when it has been determined that the rail voltage $Ep_m$ is less than $K'_{Ep}$, it is assumed that no fault occurs in the protection section, and the operation amount is reset. In this case, it is preferable to reset also the maximum value of the current variation amount held in the operation amount arithmetic module 72.

As has been described above, in the present embodiment, the voltage (rail voltage), together with the current (feeding current) supplied from the substation, is input, and the operation amount is reset when the rail voltage is less than the predetermined value ($K'_{Ep}$). By this structure, it is possible to avoid such a situation from occurring in which, for example, a fault is detected despite the fault having been cleared, and a trip instruction is sent.

In addition, in the embodiment, the voltage (rail voltage), together with the current (feeding current) supplied from the substation, is input, and the operation amount is calculated by integrating the product between the maximum value of the held current variation amount and the input rail voltage. By this structure, it is possible to make clearer the difference between the operation amounts calculated by the DC feeding protective relay devices 7 corresponding to the respective substations, since there is a difference between the rail voltages of the respective substations in accordance with the distance to the fault point, as illustrated in the above-described FIG. 6.

Furthermore, in the present embodiment, a high-resistance ground fault can be detected more exactly, by eliminating high-frequency noise of the rail voltage and current variation amount by the moving average as described above.

(Third embodiment)

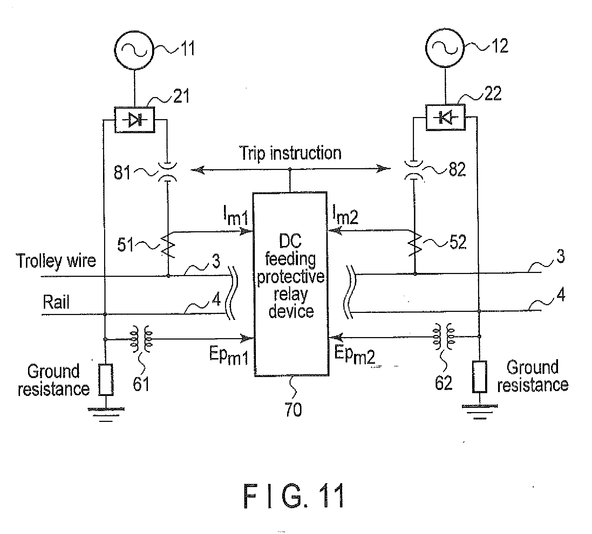

Next, a third embodiment is described. FIG. 11. illustrates a configuration of a DC feeding circuit of a DC electric railway, which includes a DC feeding protective relay device according to this embodiment. Incidentally, the same parts as in the above-described FIG. 1 are denoted by like reference numerals, and a detailed description thereof is omitted. Different parts from FIG. 1 will be mainly described.

The present embodiment differs from the above-described first embodiment in that currents which are supplied from two substations (i.e., substations at both wings of the protection section), which supply currents to the same section, as well as rail voltages, are taken into the DC feeding protective relay device. In the description below, one of the two substations which supply currents to the same section is referred to as a first substation, and the other is referred to as a second substation.

In the DC feeding circuit shown in FIG. 11, it is assumed that a power supply 11, a rectifier 21 and a DC high-speed circuit-breaker 81 are provided on the premises of the first substation. In addition, it is assumed that a power supply 12, a rectifier 22 and a DC high-speed circuit-breaker 82 are provided on the premises of the second substation.

Incidentally, since the power supplies 11 and 12 are the same as the power supply 1 shown in the above-described FIG. 1, a detailed description thereof is omitted. In addition, since the rectifiers 21 and 22 are the same as the rectifier 2 shown in the above-described FIG. 1 and the DC high-speed circuit-breakers 81 and 82 are the same as the DC high-speed circuit-breaker 8 shown in the above-described FIG. 1, a detailed description thereof is omitted.

A feeding current, which is supplied from the first substation, is level-converted by the current sensor 51, and is taken into a DC feeding protective relay device 70. In addition, a feeding current, which is supplied from the second substation, is level-converted by the current sensor 52, and is taken into the DC feeding protective relay device 70. In the meantime, the feeding currents ($I_{m1}$ and $I_{m2}$), which have been level-converted by the current sensors 51 and 52, are taken into the DC feeding protective relay device 70 at unit time intervals.

In addition, a rail voltage at the first substation is level-converted by the voltage sensor 61, and is taken into the DC feeding protective relay device 70. Further, a rail voltage at the second substation is level-converted by the voltage sensor 62, and is taken into the DC feeding protective relay device 70. In the meantime, the rail voltages ($Ep_{m1}$ and $Ep_{m2}$), which have been level-converted by the voltage sensors 61 and 62, as well as the above-described feeding currents $I_{m1}$ and $I_{m2}$, are taken into the DC feeding protective relay device 70 at unit time intervals.

The DC feeding protective relay device 70 is used in order to detect a fault (a high-resistance ground fault) in the section (i.e., between the first and second substations) to which power is supplied from the above-described first and second substations. In the description below, the section in which a fault is detected by the DC feeding protective relay device 70 (i.e., the section to which power is supplied from the first and second substations) is referred to as a protection section, for the sake of convenience.

Although omitted in FIG. 11, the DC feeding protective relay device 70 includes an input module, an operation amount arithmetic module and a determination process module, like the DC feeding protective relay device 7 according to the above-described first embodiment. In the description below, the input module, operation amount arithmetic module and determination process module included in the DC feeding protective relay device 70 are referred to as an input module 71, an operation amount arithmetic module 72 and a determination process module 73, for the sake of convenience.

The input module 71 inputs the feeding currents ($I_{m1}$ and $I_{m2}$) which have been level-converted by the current sensors 51 and 52, and the rail voltages ($Ep_{m1}$ and $Ep_{m2}$) which have been level-converted by the voltage sensors 61 and 62. Incidentally, the feeding currents $I_{m1}$ and $I_{m2}$ and the rail voltages $Ep_{m1}$ and $Ep_{m2}$, which have been input by the input module 71, are level-converted by an input converter included in the input module 71, like the above-described first embodiment, and are quantized by an analog/digital converter included in the input module 71.

The operation amount arithmetic module 72 calculates a composite current, based on the feeding currents $I_{m1}$ and $I_{m2}$ quantized by the analog/digital converter included in the input module 71. In addition, the operation amount arithmetic module 72 calculates a composite voltage, based on the rail voltages $Ep_{m1}$ and $Ep_{m2}$ quantized by the analog/digital converter included in the input module 71.

In this embodiment, when a fault has been detected by the determination process module 73, trip instructions are sent to the DC high-speed circuit-breakers 81 and 82.

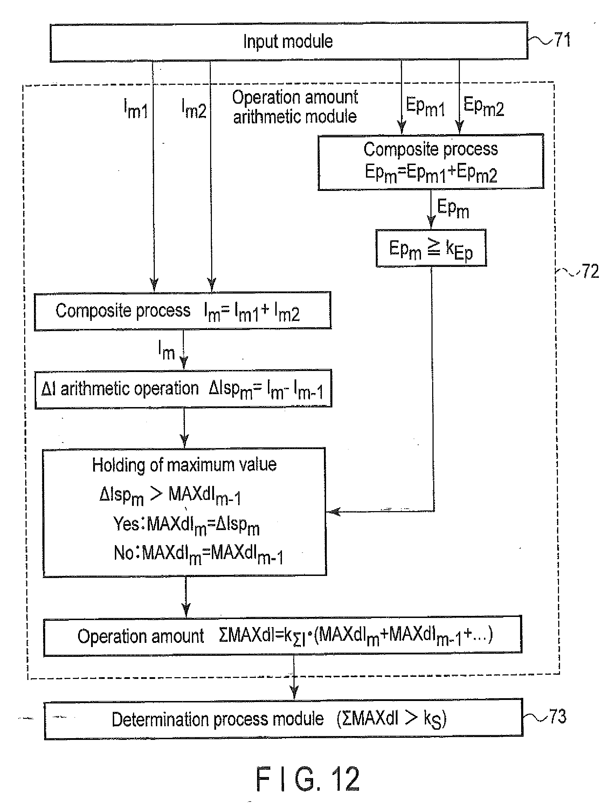

Next, referring to FIG. 12, a description is given of the operation of the DC feeding protective relay device 70 according to the present embodiment. Incidentally, a detailed description of the same parts as in the above-described FIG. 2 is omitted. Different parts from FIG. 2 will be mainly described.

To start with, the input module 71 inputs the feeding currents ($I_{m1}$ and $I_{m2}$) which have been level-converted by the current sensors 51 and 52, and the rail voltages ($Ep_{m1}$ and $Ep_{m2}$) which have been level-converted by the voltage sensors 61 and 62. The feeding currents $I_{m1}$ and $I_{m2}$ and the rail voltages $Ep_{m1}$ and $Ep_{m2}$ are input at unit time intervals.

The feeding currents $I_{m1}$ and $I_{m2}$ and the rail voltages $Ep_{m1}$ and $Ep_{m2}$, which have been input by the input module 71, are level-converted by the input converter which is included in the input module 71, and are then quantized by the analog/digital converter included in the input module 71, and delivered to the operation amount arithmetic module 72.

Next, as indicated by the following formula (7), the operation amount arithmetic module 72 calculates a composite current $I_m$ by adding the feeding currents $I_{m1}$ and $I_{m2}$ which have been delivered from the input module 71.

$$I_m = I_{m1} + I_{m2} \qquad \ldots (7)$$

In addition, as indicated by the following formula (8), the operation amount arithmetic module 72 calculates a composite voltage $Ep_m$ by adding the rail voltages $Ep_{m1}$ and $Ep_{m2}$ which have been delivered from the input module 71.

$$Ep_m + Ep_{m1} + Ep_{m2} \qquad \ldots (8)$$

Subsequently, in the DC feeding protective relay device 70, the same process as the process described above in the first or second embodiment is executed by using the obtained composite current $I_m$ and composite voltage $Ep_m$. In the present embodiment, when it has been determined that the operation amount $\Sigma MAXdI1$ is $k_s$ or more, trip instructions are sent to the DC high-speed circuit-breakers 81 and 82 shown in the above-described FIG. 11.

As has been described above, in the present embodiment, currents (feeding currents) which are supplied from two substations, which supply currents to the same section, are input at unit time intervals, and a composite current is calculated at unit time intervals by adding the currents which are supplied from the two substations. Based on the composite current calculated at the unit time intervals, a current variation amount per unit time is calculated. In the present embodiment, by this structure, when a high-resistance ground fault has occurred in the protection section, a compositing process of merging the feeding currents (electricity amounts) which have been taken in from the substations at both wings of the protection section is executed, and a variation amount caused by a fault current is amplified. Thus, the operation amount calculated in the operation amount arithmetic module 72 becomes greater than in the first embodiment, and a high-resistance ground fault can be detected more quickly (i.e., with higher sensitivity).

In addition, in the present embodiment, when a high-resistance ground fault has occurred in the protection section, trip instructions are sent to the DC high-speed circuit-breaker 81 and DC high-speed circuit-breaker 82 provided at the substations at both wings of the section. Thus, the fault detection sensitivity becomes equal between both wings of the section, and there occurs no difference in sensitivity due to the distance to the fault point. Therefore, by the process of compositing the electricity amounts at both wings of the protection section, the fault can be detected with high sensitivity and at the same time at both wings of the section.

In the meantime, in the present embodiment, when a fault has occurred outside the protection section, since a fault current passes through both wings of the section, a current variation amount for the fault current is canceled by the composite process in the DC feeding protective relay device 70. Therefore, in the present embodiment, a fault, which has occurred in the protection section, can be detected more exactly.

(Fourth embodiment)

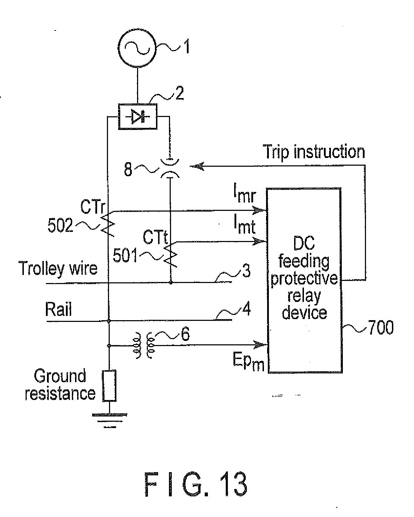

Next, a fourth embodiment is described. FIG. 13 illustrates a configuration of a DC feeding circuit of a DC electric railway, which includes a DC feeding protective relay device according to this embodiment. Incidentally, the same parts as in the above-described FIG. 1 are denoted by like reference numerals, and a detailed description thereof is omitted. Different parts from FIG. 1 will be mainly described.

The present embodiment differs from the above-described first embodiment in that a current (trolley current), which is supplied to a trolley wire provided in a section to which a current is supplied from a substation, and a current (rail current), which is supplied to a rail provided in this section, are taken into the DC feeding protective relay device. In the present embodiment, the case is assumed in which a fault (high-resistance ground fault) occurs on the premises of a substation corresponding to the DC feeding protective relay device.

The DC feeding circuit shown in FIG. 13 includes a trolley current sensor (CTt) 501 and a rail current sensor (CTr) 502.

In the present embodiment, a trolley current, which is supplied to a trolley wire 3, is level-converted by the trolley sensor 501, and is taken in a DC feeding protective relay device 700.

In addition, in this embodiment, a rail current, which is supplied to a rail 4, is level-converted by the rail sensor 502, and is taken into the DC feeding protective relay device 700.

The DC feeding protective relay device 700 is used in order to detect a fault (a high-resistance ground fault) in the section to which power is supplied from the substation. In the description below, the section in which a fault is detected by the DC feeding protective relay device 700 (i.e., the section to which power is supplied from the substation) is referred to as a protection section, for the sake of convenience.

Although omitted in FIG. 13, the DC feeding protective relay device 700 includes an input module, an operation amount arithmetic module and a determination process module, like the DC feeding protective relay device 7 according to the above-described first embodiment. In the description below, the input module, operation amount arithmetic module and determination process module included in the DC feeding protective relay device 700 are referred to as an input module 71, an operation amount arithmetic module 72 and a determination process module 73, for the sake of convenience.

The input module 71 inputs the trolley current ($I_{mt}$) which has been level-converted by the trolley current sensor 501, and the rail current ($I_{mr}$) which has been level-converted by the rail current sensor 502. The feeding currents $I_{mt}$ and $I_{mr}$, which have been input by the input module 71, are level-converted by an input converter included in the input module 71, like the above-described first embodiment, and are quantized by an analog/digital converter included in the input module 71.

The operation amount arithmetic module 72 calculates a composite current, based on the trolley current $I_{mt}$ and the rail current $I_{mr}$, quantized by the analog/digital converter included in the input module 71.

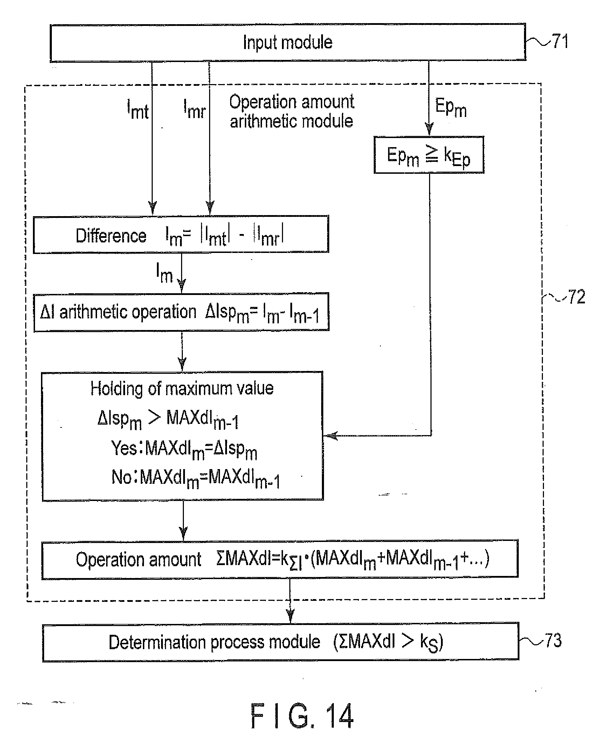

Next, referring to FIG. 14, a description is given of the operation of the DC feeding protective relay device 700 according to the present embodiment. Incidentally, a detailed description of the same parts as in the above-described FIG. 2 is omitted. Different parts from FIG. 2 will be mainly described.

To start with, the input module 71 inputs the trolley current ($I_{mt}$) which has been level-converted by the trolley current sensor 501, and the rail current ($I_{mr}$) which has been level-converted by the rail current sensor 502. The trolley current $I_{mt}$ and rail current $I_{mr}$ are input at unit time intervals.

The trolley current $I_{mt}$ and rail current $I_{mr}$, which have been input by the input module 71, are level-converted by the input converter which is included in the input module 71, and are then quantized by the analog/digital converter included in the input module 71, and delivered to the operation amount arithmetic module 72.

Next, as indicated by the following formula (9), the operation amount arithmetic module 72 calculates a composite current $I_m$ by subtracting the rail current $I_{mr}$ from the trolley current $I_{mr}$ delivered from the input module 71.

$$I_m = |I_{mt}| - |I_{mr}| \qquad \ldots (9)$$

Subsequently, in the DC feeding protective relay device 700, the same process as the process described above in the first or second embodiment is executed by using the obtained composite current $I_m$.

As has been described above, in the present embodiment, the trolley current (first current) which is supplied to the trolley wire provided in the section to which current is supplied from the substation, and the rail current (second current) which is supplied to the rail provided in this section, are input at unit time intervals. By subtracting the rail current from the input trolley current, the composite current is calculated at unit time intervals, and the current variation amount per unit time is calculated based on the composite current calculated at the unit time intervals. In the present embodiment, by this structure, a high-resistance ground fault on the premises of the substation can be detected.

In the DC feeding circuit, when a high-resistance ground fault has occurred on the premises of the substation, that is, on a front side (on the substation side) of the trolley current sensor which takes in the trolley current, no fault current flows in the trolley current sensor 501. On the other hand, since a fault current in a case where a high-resistance ground fault has occurred flows from the fault point back to the rectifier 2 via a rail leak resistance, this fault current flows in the rail current sensor 502.

Accordingly, in the DC feeding protective relay device 700 according to this embodiment, a current variation amount of a difference (i.e., fault current) between the trolley current, on which a fault current is not superimposed, and the rail current, on which the fault current is superimposed, is calculated, and a fault can be detected.

In the meantime, a load current in the protection section is superimposed on the trolley current, and a total load current in all sections is superimposed on the rail current, and it is possible that a difference in current occurs. In this case, for example, a difference between load currents may be reduced in accordance with variation time constants and a variation amount comparison time difference of the load current and fault current, whereby a variation component of the fault current can be extracted. Attention is paid to the fact that the above-described load current gently rises and the fault current sharply rises, that is, the fact that the variation time constant of the load current is large and the variation time constant of the fault current is small. Thus, by setting the variation amount comparison time difference to be greater than the variation time constant of the fault current and to be less than the variation time constant of the load current, the load current difference can be reduced.

In the meantime, in the present embodiment, when the fault current flows into the protection section, the fault current component is canceled by a subtraction between the trolley current and the rail current. In addition, also when a fault has occurred in the electric car line within the protection section or outside the section, the fault current component is canceled by a subtraction between the trolley current and the rail current. Therefore, according to the embodiment, the high-resistance ground fault on the premises of the substation can solely be detected.

According to the structure in the DC feeding protective relay device 7 relating to the above-described first embodiment, a high-resistance ground fault outside the premises of the substation can be detected. Thus, by combining the structure in the DC feeding protective relay device 700 according to the present embodiment and the structure in the DC feeding protective relay device 7 according to the first embodiment, it is possible to provide a DC feeding protective relay device which can detect a high-resistance ground fault within and outside the premises of the substation.

According to the above-described embodiments, it is possible to provide a DC feeding protective relay device and a fault detection method which can detect a high-resistance ground fault.

The invention in its broader aspects is not limited to the specific details and representative embodiments shown and described herein, and can be embodied in their implementation phases by modifying constituent components without departing from the spirit or scope of the general inventive concept of the invention. A variety of modifications of the invention may be made by appropriate combinations of a plurality of constituent components shown in each foregoing embodiment. For example, some constituent components may be omitted from the whole of the constituent components shown in each embodiment. Furthermore, the constituent components over different embodiments can be appropriately combined.

**Claims**

1. A DC feeding protective relay device **characterized by** comprising:

an input means for inputting, at intervals of a unit time, a current which is supplied from a substation;
a first calculation means for calculating a current variation amount per the unit time, based on the current which is input at the intervals of the unit time;
a holding means for holding, at the intervals of the unit time, a maximum value of the current variation amount calculated by the first calculation means;
a second calculation means for calculating an operation amount by integrating the maximum value of the current variation amount held by the holding means at the intervals of the unit time; and
a detection means for detecting a fault in a section to which a current is supplied from the substation, based on the operation amount calculated by the second calculation means.

2. The DC feeding protective relay device of Claim 1, further comprising a determination means and a reset means, wherein the input means inputs a voltage, together with the current supplied from the substation,
the determination means determines whether the input voltage is less than a predetermined value, and
the reset means resets the operation amount calculated by the second calculation means, when it has been determined that the input voltage is less than the predetermined value.

3. The DC feeding protective relay device of Claim 1, wherein the input means inputs a voltage, together with the current supplied from the substation, and
the second calculation means calculates the operation amount by integrating the maximum value of the current variation amount held by the holding means at the intervals of the unit time, and the voltage which is input at the intervals of the unit time.

4. The DC feeding protective relay device of Claim 1, further comprising a third calculation means, wherein the input means inputs, at the intervals of the unit time, currents which are supplied from two substations which supply currents to the same section,
the third calculation means calculates a composite current at the intervals of the unit time by adding the input currents supplied from the two substations, and
the first calculation means calculates the current variation amount per the unit time, based on the composite current calculated at the intervals of the unit time.

5. The DC feeding protective relay device of Claim 1, further comprising a third calculation means, wherein the input means inputs, at the intervals of the unit time, a first current which is supplied to a trolley wire provided in a section to which a current is supplied from the substation, and a second current which is supplied to a rail provided in the section,
the third calculation means calculates a composite current at the intervals of the unit time by subtracting the second current from the input first current, and
the first calculation means calculates the current variation amount per the unit time, based on the composite current calculated at the intervals of the unit time.

6. A fault detection method executed by a DC feeding protective relay device, **characterized by** comprising:

a step of inputting, at intervals of a unit time, a current which is supplied from a substation;
a step of calculating a current variation amount per the unit time, based on the current which is input at the intervals of the unit time;
a step of holding in holding means, at the intervals of the unit time, a maximum value of the calculated current variation amount;
a step of calculating an operation amount by integrating the maximum value of the current variation amount held by the holding means at the intervals of the unit time; and
a step of detecting a fault in a section to which a current is supplied from the substation, based on the calculated operation amount.

Power supply

SR ~2

HSCB

8~

CT

5~

Trolley wire ~3

Rail ~4

~6

$Ep_m$

VT

Ground
resistance

$I_m$

Trip instruction

| Input module | Operation amount arithmetic module | Determination process module |

71    72    73

~7

FIG. 1

Input module $\sim$71

Operation amount
arithmetic module

$I_m$

$Ep_m$

$Ep_m \geqq k_{Ep}$

$\sim$72

$\Delta I$ arithmetic operation $\Delta Isp_m = I_m - I_{m-1}$

Holding of maximum value

$\Delta Isp_m > MAXdI_{m-1}$

Yes : $MAXdI_m = \Delta Isp_m$

No : $MAXdI_m = MAXdI_{m-1}$

Operation amount $\quad \Sigma MAXdI = k_{\Sigma I} \cdot (MAXdI_m + MAXdI_{m-1} + ...)$

Determination process module $\quad (\Sigma MAXdI > k_S)$ $\sim$73

# FIG. 2

Section 1　　　Section 2　　　Section 3

SS$_1$　　　SS$_2$　　　SS$_3$　　　SS$_4$

1　　　1　　　1　　　1

d=0.4

Section length
ratio to ground
fault point

2　　　2　　　2　　　2

I1　　　I2　　　I3　　　I4

Ground
fault point

Trolley　　　3

Rail　　　4

L1　　　L3

Ep1　　　Ep2　　　Rf　　　Ep3　　　Ep4

FIG. 3

Feeding current

Elapsed time [ms]

-500　　　0　　　500　　　1000

— I1
— I2
--- I3
-··- I4

FIG. 4

FIG. 5

FIG. 6

FIG. 7

FIG. 8

FIG. 9

FIG. 10

F I G. 11

F I G. 12

FIG. 13

Input module ~71

Operation amount
arithmetic module

$I_{mt}$    $I_{mr}$                    $Ep_m$

$$Ep_m \geqq k_{Ep}$$

Difference    $I_m = |I_{mt}| - |I_{mr}|$

$I_m$

$\Delta I$ arithmetic operation   $\Delta Isp_m = I_m - I_{m-1}$

Holding of maximum value

$$\Delta Isp_m > MAXdI_{m-1}$$

$$Yes : MAXdI_m = \Delta Isp_m$$

$$No : MAXdI_m = MAXdI_{m-1}$$

Operation amount    $\Sigma MAXdI = k_{\Sigma I} \cdot (MAXdI_m + MAXdI_{m-1} + \ldots)$

~72

Determination process module   $(\Sigma MAXdI > k_S)$ ~73

F I G. 14

## INTERNATIONAL SEARCH REPORT

| International application No. |
|---|
| PCT/JP2012/078022 |

A. CLASSIFICATION OF SUBJECT MATTER
*H02H3/16*(2006.01)i, *H02H3/44*(2006.01)i

According to International Patent Classification (IPC) or to both national classification and IPC

B. FIELDS SEARCHED

Minimum documentation searched (classification system followed by classification symbols)
H02H3/16, H02H3/44

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2011-164079 A  (University of the Ryukyus), 25 August 2011 (25.08.2011), entire text; all drawings (Family: none) | 1-6 |
| A | JP 2010-41892 A  (Meidensha Corp.), 18 February 2010 (18.02.2010), entire text; all drawings (Family: none) | 1-6 |
| A | JP 5-268717 A  (Toshiba Corp.), 15 October 1993 (15.10.1993), entire text; all drawings (Family: none) | 1-6 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 January, 2013 (09.01.13) | 22 January, 2013 (22.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5713924 B

- JP 2007049858 A

**Non-patent literature cited in the description**

- Denki-Tetsudo Handbook. Corona-sha, 2007

- Denki-Gakkai Gijyutsu Hokoku. Survey on Protection and Protection Coordination in DC electric railway. Institute of Electrical Engineers, 1995